# EUROPEAN PATENT APPLICATION

(11) **EP 3 838 084 A1**
(43) Date of publication of application: **23.06.2021**
(21) Application number: 19219103.9
(22) Date of filing: 20.12.2019
(51) Int. Cl.: A47J 36/32, A47J 43/04

(54) **NUTRITIONAL INTELLIGENCE SYSTEM FOR KITCHEN MACHINES**

(30) Priority: 18.12.2019 PT 2019115999
(71) Applicant: Modelo Continente Hipermercados, S.A., 4464-503 Senhora da Hora (PT)
(72) Inventor: FARIA ROCHA, Duarte Nuno, 3800-423 AVEIRO (PT)
(74) Representative: do Nascimento Gomes, Rui

(57) **Abstract**

The present application describes a nutritional intelligence system for kitchen machines. The system now developed uses the nutritional information panel of food products, stored in a food product data platform (6), provided in a network-based system, to make available for execution a set of automatic cooking programs of a kitchen machine. Such controlling operation is based in the calculation of a nutritional factor, which is performed in a nutritional intelligence modelling module (3), which is part of the processing unit (2) of the kitchen machine (1), and a further comparison with a preconfigured standard nutritional factor.

## Description

### TECHNICAL FIELD

The present application is enclosed in the area of kitchen machines, in particular kitchen machines which are electrically ran/operated, typically comprising a mixing cup in which automatic mixing actions are performed and operating with automatic cooking programs, and relates to a system for controlling the operation of a kitchen machine. Particularly, the present invention relates to a system for controlling the operation of a kitchen machine. More particularly, it is disclosed a nutritional intelligence system for kitchen machines.

### BACKGROUND ART

Current state of the art kitchen machines' control systems is based on approaches which centralize their implementation in internal factors to own kitchen machine, such as controlling power levels, rotational speeds, temperatures or cycles of operation. These functional parameters are monitored during the food preparation step, and compared to reference values to perform the control operation.

As an example, document WO2017211975A1 describes a method for operating a food processor wherein in a preparation mode at least one processing device of the food processor is controlled by measuring a set of operative parameters such as temperature (in particular for the regulated control of a heating power of a heating element of the food processor), agitator speed, stirring time and direction, electrical quantity (motor current of the kitchen machine) or preparation time (total cooking time) etc.

In line with that disclosure, document EP3206095B1 describes a control system to control functions of a cooking apparatus for performing food processing steps thereon. The system comprises a control parameter interface specifically configured to receive, from a remote temperature sensor, temperature data reflecting one or more temperature values associated with a component of food product being processed by the cooking apparatus, being the operation of said apparatus controlled in reference to a standard temperature value.

As can be seen from the documents above, which summarize the common practice, all the cited art addresses the control operation issue on a comparative basis, not considering the important characteristic of food products to be used by the kitchen machine in the food preparation step, namely their nutritional information panel or their physical and eco-toxicity parameters used to calculate the environmental impact factor associated to the food being cooked, and how those parameters can influence the operation of the kitchen machine. In connection to this, none of the cited art seems to provide a kitchen apparatus able to operate as an information hub, making available to the user a wide range of food products data that can be accessed directly from the kitchen machine and which can be processed in order to shape the operation of the apparatus.

### SUMMARY

It is an object of the present application a nutritional intelligence system for kitchen machines. The system now developed is comprised by:
a database structure provided in a food product data platform, wherein said database structure comprising a plurality of records. Each record is assigned to a food product and is comprised by a plurality of fields, wherein a first field contains an unique identification symbol and a second field contains a plurality of subfields for storing the nutrition information panel of the food product;
at least one kitchen machine, operatively coupled to the food product data platform. The processing unit of the kitchen machine comprises a nutritional intelligence modelling module configured to calculate a nutritional factor based on at least the nutrition information panel of at least one food product.

The nutritional intelligence modelling module is operable to validate the execution of an automatic cooking program whose nutritional factor is bellow a preconfigured standard nutritional factor, and in that way, controlling the operation of the kitchen machine.

### DESCRIPTION OF FIGURES

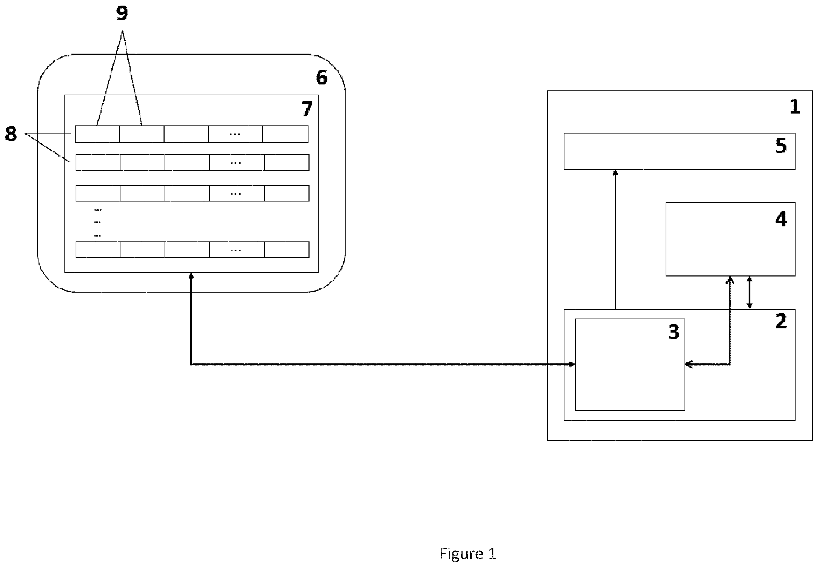

Figure 1 illustrates a block diagram of the nutritional intelligence system for kitchen machines developed, where the reference signs represent:
1 - kitchen machine;
2 - processing unit;
3 - nutritional intelligence modelling module;
4 - interface unit;
5 - kitchen machine hardware elements;
6 - food product data platform;
7 - database structure;
8 - record;
9 - field.

### DETAILED DESCRIPTION

The more general and advantageous configurations of the present application are described in the Summary. Such configurations are detailed below in accordance with other advantageous and/or preferred embodiments of implementation of the technology developed.

In an inventive aspect of the present application, it is described a nutritional intelligence system for kitchen machines (1). In the context of the present application, a kitchen machine is electrically ran and comprises i) a mixing cup, ii) mixing means provided in the mixing cup, iii) a base station suitable for coupling of the mixing cup and which thereby is able to provide motion to the mixing means, iv) means for automatically measuring weight or volume of food products placed into the mixing cup, v) a processing unit (2) comprising processing means programmed to operate the kitchen machine (1) hardware elements (5) i) to iv) according to an automatic cooking program selected from a list of automatic cooking programs stored in a memory module of such processing unit (2); said automatic cooking program including a list of food products to the placed into the mixing cup ; and vi) an interface unit (4).

The system now proposed is comprised by a food product data platform (6), provided in a network-based system, and includes a database structure (7), preferably a relational database, comprising a plurality of records (8), wherein each record is assigned to a food product and being comprised by a plurality of fields (9): a first field containing an unique identification symbol and a second field containing a plurality of subfields for storing the nutrition information panel of the food product. The unique identification symbol is used to unambiguously identify a food product and to provide access to its respective nutritional information. The nutrition information panel contains data related to the nutrients of each food product, recommended daily allowances and energy conversion factors among other important information related to food products, that can be retrieved from official nutritional rating systems.

The system also comprises at least one kitchen machine (1), that is operatively coupled to the food product data platform (6). By operatively couple, in the context of the present application, one refers to a bidirectional data link established between both system's elements, for controlling and data processing purposes, being such link preferably programmed according to any wireless network protocol know from the art.

According to the system now developed, the processing unit (2) of the kitchen machine (1) further comprises a nutritional intelligence modelling module (3), configured to calculate a nutritional factor based on at least the nutrition information panel of at least one food product. Such calculation implies the consideration of the information related to a food product to be used by an user operating the kitchen machine (1), stored in the food product data platform (6), and its respective quantities measured for example, using the weighing means of the kitchen machine (1), or computed using its interface unit (4). Once the nutritional factor is calculated, the nutritional intelligence modelling module (3) can allow or block the execution of an automatic cooking program of the kitchen machine (1) if its respective nutritional factor is above a preconfigured standard nutritional factor programmed by the user using the interface unit (4) of the kitchen machine (1).

In one embodiment of the system, the nutritional information panel stored in the food product data platform's database structure (7) comprises information related to food product's quantity per serving, wherein such information refers to at least energy, protein, lipids, carbohydrate, vitamin, cholesterol and calories. In an alternative embodiment, the record of the food product data platform's database structure (7) further includes a third field comprising a plurality of sub-fields for storing environmental impact data of a food product. Such environmental impact data of a food product can be related to information about the nature of the food product, production conditions and expiration date. Based on that, the nutritional intelligence modelling module (3) is configured to calculate a nutritional factor based on the nutritional information panel and on the environmental impact data of at least one food product.

In another innovative aspect of the system, the interface unit (4) of the kitchen machine (1) is operatively coupled to the nutritional intelligence modelling module (3) and comprises an input module comprising detection means adapted to read the identification symbol of a food product and an output module adapted to display manipulated data. According to an alternative embodiment of the system, the detection means of the input module are of optical type, preferably a laser scanner, a LED scanner, a digital camera-based scanner or an omnidirectional scanner. The identification symbol of a food product can be a code provided in a tag associated to the food product or its packing, preferably the code consisting of a n-dimensional code, preferably a barcode or a QR code. The nutritional intelligence modelling module is comprised by processing means that, based on the interaction with the interface unit (4), is programmed to:
i. Calculate the nutritional factor of the automatic cooking programs stored in the memory unit of the processing unit (2), by accessing to the data contained in the plurality of fields of the food product data platform's database structure;
ii. Calculate the nutritional factor of the food products identified by the input module, in particular, by its detection means following a non-automatic cooking executed by the user, by accessing to the data contained in the plurality of fields of the food product data platform's database structure; By non-automatic cooking program, one refers to the operation of the kitchen machine wherein all its operational instructions are programmed by the user during the cooking procedure;
iii. Communicate the nutritional factor to the output module to be displayed. For that, the output module of the interface unit (4) comprises output means, preferably a liquid crystal display screen.

In one embodiment of the system, the input module of the interface unit (4) comprises a further input source module, that is operatively coupled to the processing unit (2). The processing unit (2), based on input parameters collected from the input source module, is further operable to:
i. According to the input parameters collected by the input source module, add new records to the food product data platform's database structure (7), assigned to new food products detected by the detection means of the interface unit (4) that are not present in said database (7);
ii. Program the plurality of fields of a new record according to input parameters collected by the input source module.

In a further embodiment of the system, the input source module includes writing means, preferably the writing means are of a keyboard type. In another embodiment, the keyboard being of software type, wherein the writing means are touch-based and comprise a liquid crystal display screen where an array of virtual keys is displayed to permit an user to compute an input parameter by touching the software keyboard. Alternatively, the keyboard is of hardware type, wherein the writing means comprise a set of real keys to be pressed by an user to compute an input parameter.

In another embodiment of the system, the input source module includes an automatic speech recognition module and at least one microphone. The automatic speech recognition module comprising processing means programmed to implement an acoustic speech recognition model configured to recognize speeches in acoustic signals detected by the microphone as character information of an input parameter.

In another embodiment, the interface unit (4) comprises a user interface platform adapted to provide a user access to the kitchen machine's processing unit (2) for computing input parameters by means of a mobile device application configured to communicate with the user interface platform, through a wide area network local area network or personal area network.

In the context of the present application, an input parameter is an operative instruction given by an user through the interface unit (4) of the kitchen machine (1). Said operative instruction is operable to
- Add or remove records to the food product data platform's database structure (7);
- Configure the fields of the records of the food product data platform's database structure (7);
- Configure the standard nutritional factor;
- Select a valid automatic cooking program to be executed by the kitchen machine (1).

In another embodiment of the system, the plurality of records (8) contained in the database structure (7) of the food product data platform (6) are periodically updated by external sources of information, related to food product data. Such external sources are operatively connected to the food product data platform (6). Particularly, such external sources of food product data can be a nutritional information panel database, comprising a plurality of nutritional data associated to food products updated from official nutritional rating systems. Additionally external sources related to environmental impact factor data can also be used.

As will be clear to one skilled in the art, the present invention should not be limited to the embodiments described herein, and a number of changes are possible which remain within the scope of the present invention.

Of course, the preferred embodiments shown above are combinable, in the different possible forms, being herein avoided the repetition all such combinations.

## Claims

1. Nutritional intelligence system for kitchen machines, such kitchen machine (1) being electrically ran and comprising i) a mixing cup, ii) mixing means provided in the mixing cup, iii) a base station suitable for coupling of the mixing cup and which thereby is able to provide motion to the mixing means, iv) means for automatically measuring weight or volume of food products placed into the mixing cup, v) a processing unit (2) comprising processing means programmed to operate the kitchen machine hardware elements (5) i) to iv) according to an automatic cooking program selected from a list of automatic cooking programs stored in a memory module of such processing unit (2); said automatic cooking program including a list of food products to the placed into the mixing cup; and vi) an interface unit (4); the system being **characterised in that** it comprises:
- a food product data platform (6), provided in a network-based system, and comprising a database structure (7), preferably a relational database, comprising a plurality of records (8), wherein each record is assigned to a food product and being comprised by a plurality of fields (9); a first field containing an unique identification symbol and a second field containing a plurality of subfields for storing the nutrition information panel of the food product;
- at least one kitchen machine (1), operatively coupled to the food product data platform (6), wherein the processing unit (2) of the kitchen machine (1) further comprises a nutritional intelligence modelling module (3) configured to calculate a nutritional factor based on at least the nutrition information panel of at least one food product;
and wherein, the nutritional intelligence modelling module (3) is operable to validate the execution of an automatic cooking program whose nutritional factor is bellow a preconfigured standard nutritional factor.

2. System according to claim 1, wherein the nutritional information panel comprises information related to food product's quantity per serving; such information related to at least energy, protein, lipids, carbohydrate, vitamins, cholesterol and calories.

3. System according to claims 1 or 2, wherein a record (3) of the food product data platform's database structure (7) further includes a third field (9) comprising a plurality of sub-fields for storing environmental impact data of a food product.

4. System according to claim 3, wherein the environmental impact data of a food product relates to information about the nature of the food product, production conditions and expiration date.

5. System according to any of the claims 3 or 4, wherein the nutritional intelligence modelling module (3) is configured to calculate the nutritional factor based on the nutritional information panel and on the environmental impact data of at least one food product.

6. System according to any of the previous claims 1 to 5, wherein the interface unit (4) of the kitchen machine (1) is operatively coupled to the nutritional intelligence modelling module (3) and comprises an input module comprising detection means adapted to read the identification symbol of a food product and an output module adapted to display manipulated data; wherein said nutritional intelligence modelling module (3) comprises processing means programmed to:
i. Calculate the nutritional factor of the automatic cooking programs, by accessing to the data contained in the plurality of fields (9) of the food product data platform's database structure (7);
ii. Calculate the nutritional factor of the food products identified by the input module, by accessing to the data contained in the plurality of fields (9) of the food product data platform's database structure (7);
iii. Communicate the nutritional factor to the output module to be displayed.

7. System according to any of the claim 6, wherein the detection means of the input module are of optical type, preferably a laser scanner, a LED scanner, a digital camera-based scanner or an omnidirectional scanner; and wherein the identification symbol of a food product is a code provided in a tag, preferably the code consisting of a n-dimensional code, preferably a barcode or a QR code.

8. System according to any of the claims 6 or 7, wherein the input module further comprises an input source module operatively coupled to the processing unit (2); wherein said processing unit (2) being further operable to:
- according to input parameters collected by the input source module, add new records (8) to the food product data platform's database structure (7), assigned to new food products detected by the detection means of the interface unit (4) that are not present in said database (7);
- program the plurality of fields (9) of a new record (8) according to input parameters collected by the input source module.

9. System according to claim 8, wherein the input source module includes writing means, preferably the writing means are of a keyboard type; such keyboard being of:
- a software type, wherein the writing means are touch-based and comprise a liquid crystal display screen where an array of virtual keys is displayed to permit an user to compute an input parameter by touching the software keyboard; or
- hardware type, wherein the writing means comprise a set of real keys to be pressed by an user to compute an input parameter.

10. System according to any of the claims 8 or 9, wherein the input source module includes an automatic speech recognition module and at least one microphone; said automatic speech recognition module comprising processing means programmed to implement an acoustic speech recognition model configured to recognize speeches in acoustic signals detected by the microphone as character information of an input parameter.

11. System according to any of the claims 8 to 10 wherein the interface unit (4) comprises a user interface platform adapted to provide a user access to the kitchen machine's processing unit (2) for computing input parameters by means of a mobile device application configured to communicate with the user interface platform, through a wide area network local area network or personal area network.

12. System according to any of the previous claims 8 to 11 wherein an input parameter is an operative instruction operable to:
- Add or remove records (8) to the food product data platform's database structure (7);
- Configure the fields (9) of the records (8) of the food product data platform's database structure (7);
- Configure the standard nutritional factor;
- Select a valid automatic cooking program to be executed by the kitchen machine (1).

13. System according to any of the previous claims 6 to 12 wherein the output module of the interface unit (4) comprises output means, preferably a liquid crystal display screen.

14. System according to any of the previous claims, wherein the plurality of records (8) contained in the database structure (7) of the food product data platform (6) are periodically updated by external sources of food product data, which are operatively connected to the food product data platform.

15. System according to claim 14, wherein the external sources of food product data are:
- A nutritional information panel database, comprising a plurality of nutritional data associated to food products updated from official nutritional rating systems;
- An environmental impact factor database comprising a plurality of updated environmental impact data associated to food products.
